# EUROPEAN PATENT APPLICATION

(11) **EP 4 484 022 A1**
(43) Date of publication of application: **01.01.2025**
(21) Application number: 23182493.9
(22) Date of filing: 29.06.2023
(51) Int. Cl.: B05C 17/01, A61C 5/62

(54) **DISPENSING DEVICES**

(71) Applicant: medmix Switzerland AG, 9469 Haag (Rheintal) (CH)
(72) Inventor: The designation of the inventor has not yet been filed
(74) Representative: Manitz Finsterwald Patent- und Rechtsanwaltspartnerschaft mbB

(57) **Abstract**

The present invention relates to a dispensing device for dispensing in particular dental substances, comprises a main body, a dispensing mechanism and an operating mechanism. Said dispensing mechanism is configured to dispense the substances from the dispensing device. Said operating member is configured to be moved manually by a user from a non-operating position to an operating position for activating the dispensing mechanism. The dispensing mechanism comprises a piston rod configured to act in a proximal direction on the substances for dispensing the substances from the dispensing device, a coupling member configured to couple the operating member operatively with the piston rod and a first biasing member biasing the coupling member in the proximal direction. The coupling member is configured such that an operation stroke of the operating member from its non-operating position to its operating position results directly in a distally directed helical charging movement of the coupling member relative to the main body against the forces of the first biasing member, followed by a proximal, in particular non-rotational, dispensing movement of the coupling member and a thereby caused proximal dispensing movement of the piston rod.

## Description

The present invention relates to dispensing devices for dispensing dental substances. In particular, the dispensing devices described in the following are configured for dispensing multiple doses of a fixed amount each dose from a cartridge connected to the dispensing device.

To date, dispensing devices are often quite complicated with respect to handling, in particular when the dispensing device requires the separate setting of a dose before dispensing said dose.

There exists a great demand for dispensing devices easy to handle and with a reduced risk of mishandling by a user.

Therefore, it is an object of the present invention to provide a dispensing device with simplified handling and reduced risk of mishandling by a user. This object is solved by the subject matter of independent claim 1. Preferable modifications for such a dispensing device can be taken from the dependent claims.

According to the present invention a dispensing device for dispensing in particular dental substances, comprises a main body, a dispensing mechanism and an operating mechanism. Said dispensing mechanism is configured to dispense the substances from the dispensing device. Said operating member is configured to be moved manually by a user from a non-operating position to an operating position for activating the dispensing mechanism. The dispensing mechanism comprises a piston rod configured to act in a proximal direction on the substances for dispensing the substances from the dispensing device, a coupling member configured to couple the operating member operatively with the piston rod and a first biasing member biasing the coupling member in the proximal direction. The coupling member is configured such that an operation stroke of the operating member from its non-operating position to its operating position results directly in a distally directed helical charging movement of the coupling member relative to the main body against the forces of the first biasing member, followed by a proximal, in particular non-rotational, dispensing movement of the coupling member and a thereby caused proximal dispensing movement of the piston rod.

In other words, a full operation stroke of a single operating member causes a combined charging and dispensing operation of the dispensing mechanism. Thus, a user has not to operate a dose setting mechanism for charging the dispensing device and a therefrom separate dose dispensing mechanism for dispensing the set dose. This results in a facilitated handling. Furthermore, the above configuration is configured to dispense a prefixed amount of the substances per full operation stroke. Thus, an incorrect setting of the dose to be dispensed is not possible anymore.

Preferably, the coupling member is coupled via a first clutch to the operating member, via a second clutch to the main body and engaged threadedly with a first outer thread of the piston rod.

Such a specific single part coupling member depicts a quite simple but reliable possibility for implementing the above functionality.

Preferably, the piston rod comprises a second outer thread running in the opposite direction than the first outer thread along the piston rod. In particular, the second thread overlaps at least partly, in particular fully, with the first outer thread.

Said two threads allow a very specific but highly flexible movement characteristic for the piston rod for implementing the above functionality.

Preferably, the second outer thread is engaged with a guiding member coupled in a rotationally releasable manner to the main body.

The formulation "rotationally releasable" includes that it is rotational lockable with respect to the main body. Said guiding member allows a rotational locking of the piston rod during the dose setting phase and, thus, the reliable prevention of premature dispensing of the substances. Furthermore, said guiding member allows a rotational releasing of the piston rod for a resetting procedure necessary for reloading the dispensing device with a new cartridge.

Preferably, the pitch of the second outer thread is equal to the pitch of the first outer thread. In particular, the pitch of the first outer thread lies within the range of 1mm to 40mm, preferably within the range of 1.5mm to 20mm, and/or the pitch of the second outer thread lies within the range of 1mm to 40mm, preferably within the range of 1.5mm to 20mm.

Equal pitches allow a dispensing movement of the piston rod with the same amount then the charging movement of the coupling member. Said specific ranges have been identified as very suitable for the intended usages, in particular for dental substances.

Alternatively, the pitch of the second outer thread is smaller than the pitch of the first outer thread. In particular, the pitch of the first outer thread lies within the range of 1mm to 40mm, preferably within the range of 1.5mm to 20mm, and/or the pitch of the second outer thread lies within the range of 0.5mm to 39.5mm, preferably within the range of 1mm to 19.5mm.

Such a configuration allows an advantageous mechanical conversion between the charging movement of the coupling member and the dispensing movement of the piston rod. Said specific ranges have been identified as very suitable for the intended usages, in particular for dental substances.

Further alternatively, the pitch of the second outer thread is greater than the pitch of the first outer thread. In particular, the pitch of the first outer thread lies within the range of 1mm to 40mm, preferably within the range of 1.5mm to 20mm and/or the pitch of the second outer thread lies within the range of 1mm to infinite mm.

For the sake of clarity, it is pointed to the fact that a pitch of infinite mm corresponds to purely axially extending splines. Such a configuration allows another advantageous mechanical conversion between the charging movement of the coupling member and the dispensing movement of the piston rod. Said specific ranges have been identified as very suitable for the intended usages, in particular for dental substances.

Preferably, the guiding member is coupled via a third clutch to the main body, wherein the guiding member or a separate clutch element is interacting with the guiding member to form the third clutch a.

Said third clutch allows the above rotational releasability with respect to the housing.

Preferably, said clutch element comprises inner splines configured to be engaged with outer splines of the guiding member, outer guiding features configured to engage axially extending inner guiding recesses along the main body, and/or ramping protrusions configured to contact a ramp feature of the cartridge or a ramp feature of a further transmitting member acting between the cartridge and the clutch element.

Such a configuration is highly functional and compact.

Preferably, the guiding member or the separate clutch element is axially movable along the longitudinal direction of the main body between an in particular distal locking position, in which the third clutch is locked, and an in particular proximal releasing position, in which the third clutch is released.

Such a configuration is structurally quite simple and compact but highly reliable for implementing the above functionality.

Preferably, the guiding member or the separate clutch element, respectively, is biased by a second biasing member from its locking position to its releasing position.

Said second biasing member is a simple but reliable possibility for implementing the described clutch functionality.

Preferably, the main body is configured to receive and hold a cartridge containing the substances to be dispensed by the dispensing device. The guiding member or the separate clutch element, respectively, is configured such that the cartridge pushes the guiding member or the separate clutch element, respectively, directly or via at least one further transmitting member into its locking position, when being received and/or held by the main body.

With such a configuration, an operation of the third is coupled to the coupling state of the cartridge and, thus, automated, which results in a facilitated handling of the dispensing device during a cartridge exchange process for reloading the dispensing device.

Preferably, the second biasing member is compressed between the guiding member or the separate clutch element, respectively, and the coupling member, or between the guiding member or the separate clutch element, respectively, and the main body.

Such configurations are very robust and compact.

Preferably, the piston rod is coupled, in particular via an intermediate member, to a third biasing member biasing the piston rod in the proximal direction. Said third biasing member is configured to cause a proximal priming movement of the piston rod when the third clutch is released.

With such a configuration, an automated priming process preventing the dispensing of incomplete does is achieved.

Preferably, the third biasing member is configured not to generate a load high enough to cause a dispensing of the substances from the cartridge, when being received and/or held by the main body.

Thus, an undesired premature and uncontrolled dispensing process is prevented reliably.

Preferably, the operating member comprises a lever arm coupled pivotably against the forces of a fourth biasing member to the main body. Said fourth biasing member is in particular configured to act between the lever arm and the main housing or between the lever arm and a cartridge received and/or held by the main body.

Thus, upon releasing of the operation member by a user, said operation member is forced back into its initial position.

Preferably, the first clutch is an in particular radially oriented one-way snap-fit-ratchet clutch, the second clutch is an in particular distally oriented one-way double-ratchet clutch and/or the third clutch is an in particular proximally oriented releasable tooth-clutch.

Such configurations are very compact, robust and reliable.

Preferably, the first biasing member is an in particular conical or cylindrical coil spring or a plate spring, the second biasing member is an in particular cylindrical coil spring or a plate spring, the third biasing member is an in particular cylindrical coil spring and/or the fourth biasing member is an in particular single-layered plate spring, in particular fixed to the lever arm or formed as intrinsic component of the lever arm.

Such configurations are very compact, robust and reliable.

Preferably, the main body comprises a proximal housing section, a distal housing section and an internal connection section. Said the proximal housing section, distal housing section and/or internal connection section are coupled to each other releasably, fixed to each of non-releasably or formed integrally.

Such configurations are very robust, easy to manufacture and/or flexible adaptable.

Preferably, the second clutch acts between the coupling member and the internal connection section and/or the third clutch acts between the guiding member and the internal connection section.

Such configurations are very robust and compact.

Preferably, the dispensing device further comprises an outer housing enclosing at least partly the proximal housing section, the distal housing section and/or the inner connection section.

Said outer housing results in an improved robustness and dirt resistance of the overall dispensing device.

Preferably, the main body is configured such that the cartridge containing the substances to be dispensed with the dispensing device can be fixed thereto by a bayonet coupling. Said bayonet coupling acts in particular between a distal end section of the cartridge and the internal connection section c of the main body or a proximal end section of the cartridge and the proximal housing section.

Bayonet couplings are easy to operate but allow a reliable coupling between the cartridge and the main body of the dispensing device.

Preferably, the main body is configured such that a dispensing tip, in particular comprising a tip housing and an internal guiding structure, can be coupled, in particular via a further bayonet coupling, thereto.

Such a dispensing tip can adapt and, thus, improve the dispensing characteristics substantially in view of specific demands of a user.

Exemplary embodiments and functions of the present disclosure are described herein in conjunction with the following drawings, wherein:
- FIG. 1: shows a cross-sectional view of a first exemplary dispensing device in accordance with the present invention;
- FIG. 2: shows a perspective view of the dispensing device of FIG. 1 with a transparent distal housing section;
- FIG. 3A: shows a perspective view of specific components of the dispensing mechanism of the dispensing device of FIGS. 1 and 2 during a dose setting process;
- FIG. 3B: shows a cross-sectional view of the components shown in FIG. 3A during the dose setting process;
- FIG. 4A: shows a perspective view of the components of FIG. 3A during a dose dispensing process;
- FIG. 4B: shows a cross-sectional view of the components of FIG. 3B during the dose dispensing process;
- FIG. 5: shows a perspective view of the piston rod and of a resetting element of the dispensing device of FIGS. 1 to 4B;
- FIG. 6: shows an alternative configuration for the piston rod and the resetting element of FIG. 5;
- FIG. 7A: shows a cross-sectional view of the main components of the dispensing mechanism of the dispensing device of FIGS. 1 to 5 during a first step of a resetting process;
- FIG. 7B: shows a cross-sectional view of the main components of the dispensing mechanism of the dispensing device of FIGS. 1 to 5 during a second step of the resetting process;
- FIG. 7C: shows a cross-sectional view of the cartridge, the piston rod and the piston of the dispensing device of FIGS. 1 to 5 during a third step of the resetting process;
- FIG. 7D: shows a cross-sectional view of the main components of the dispensing mechanism of the dispensing device of FIGS. 1 to 5 during the third step of the resetting process;
- FIG. 8A: shows a perspective view of a bayonet coupling illustrating the decoupling process of the cartridge from the dispensing device of FIGS. 1 to 5;
- FIG. 8B: shows a perspective view of a bayonet coupling illustrating the coupling process of the cartridge to the dispensing device of FIGS. 1 to 5;
- FIG. 9A: shows a cross-sectional view of an exemplary multi component clutch acting between the piston rod and the housing in a disengaged state;
- FIG. 9B: shows a cross-sectional view the multi component clutch of FIG. 9A in an engaged state;
- FIG. 10A: shows a cross-sectional view of a second exemplary dispensing device in accordance with the present invention;
- FIG. 10B: shows a perspective view of the dispensing device of FIG. 10A;
- FIG. 11A: shows a cross-sectional view of a third exemplary dispensing device in accordance with the present invention;
- FIG. 11B: shows a perspective view of the dispensing device of FIG. 11A;
- FIG. 12A: shows a cross-sectional view of the main components of the dispensing mechanism of the dispensing device of FIGS. 11A and 11B in a first step of a cartridge removing process;
- FIG. 12B: shows a cross-sectional view of the components of FIG. 12A in a second step of the cartridge removing process;
- FIG. 12C: shows a cross-sectional view of the components of FIGS. 12A and 12B in a third step of the cartridge removing process; and
- FIG. 13: shows a perspective view of a clutch element and a guiding member of the multi part clutch of the dispensing device of FIGS. 11A to 12C.

In the present document, the term "distal" refers to the part/end of the device, or the parts/ends of the components or members thereof, which in accordance with the use of the device, is located the furthest away from a delivery site of a patient. Correspondingly, the term "proximal" refers to the part/end of the device, or the parts/ends of the members thereof, which in accordance with the use of the device is located closest to the delivery site of the patient.

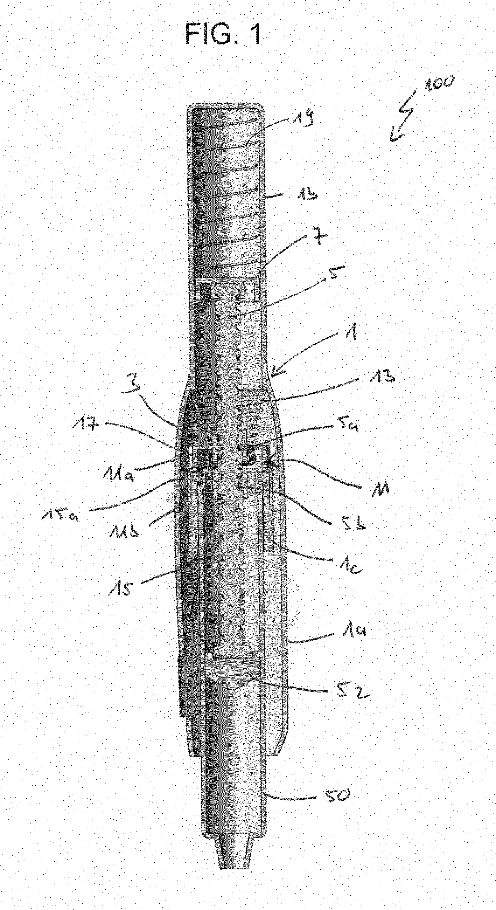

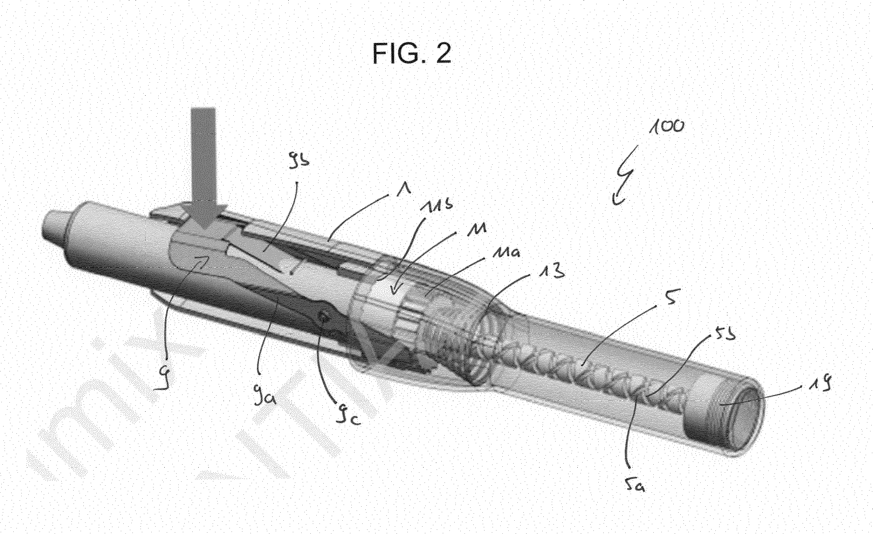

As can be seen in FIGS. 1 and 2, an exemplary dispensing device 100 in accordance with the present invention for dispensing substances, like in particular dental substances, comprises a main body 1, a dispensing mechanism 3 and an operating member 9 (see FIG. 2). Said dispensing mechanism 3 is configured to dispense the substances, while the operating member 9 is configured to be moved manually by a user from a non-operating position to an operating position for activating the dispensing mechanism 3 and, thus, the dispensing of the substances.

Said substances are stored within and dispensed from a cartridge 50 coupled to the dispensing device 100.

The dispensing mechanism 3 comprises a piston rod 5, a coupling member 11 and a first biasing member 13. Said piston rod 5 is configured to act in the proximal direction on a piston 52 within the cartridge 50 and, thus, on the substances for dispensing them. The coupling member 11 is configured to couple the operating member 9 operatively with the piston rod 5. The first biasing member 13 acts on the coupling member 11 to bias the coupling member 11 in the proximal direction (i.e. down in FIG. 1).

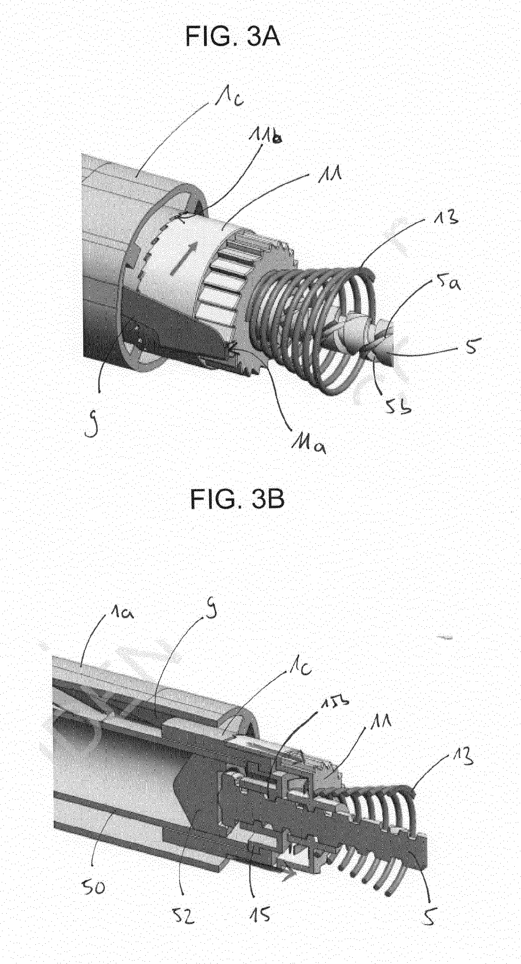

As indicated in FIGS. 3A and 3B, the coupling member 11 is configured such that an operation stroke of the operating member 9 (in the direction indicated in FIG. 2) results in a distally directed helical charging movement of the coupling member 11 (see the two arrows in FIGS. 3A and 3B) relative to the main body 1 against the forces of the first biasing member 13. For causing said helical movement, the coupling member 11 is coupled via a first clutch 11a to the operating member 9 and via a second clutch 11b to the main body 1, in particular to an internal housing connecting section 1c of the main body 1. Said second clutch 11b can act for example between the coupling member 11 said an internal connection section 1c of the main body 1 (see for example FIG. 1). The coupling member 11 is further engaged threadedly with a first outer thread 5a of the piston rod 5. In the present configuration, the first clutch 11a is a radially oriented one-way snap-fit-ratchet clutch and the second clutch 11b is a distally oriented one-way double-ratchet clutch (see in particular FIG. 3A).

Thus, a translational pushing force acting on a first end section of the lever arm 9a of the operating member 9 results in a rotational movement of said lever arm 9a around a rotary pin 9c connected to the main body 1. Said rotation results due to the two clutches 11a and 11b in the above described distally directed helical movement of the coupling member 11 along the longitudinal axis of the dispensing device 100 (i.e. upwards in FIG. 1).

As can be seen in FIG. 2, the operating member 9 is to be pushed against the forces of a fourth basing member 9b. Here, the fourth biasing member 9b is a, in particular single-layered, plate spring formed as intrinsic component of the lever arm 9a. However, said fourth biasing member 9b can also be provided as separate component fixed to the lever arm 9a or merely as separate component acting on the lever arm 9a. Said fourth biasing member 9b serves as resetting member for resetting the operating member 9 when the operating member 9 is released after a full operation stroke thereof. For this, the fourth biasing member 9b is configured to act between the lever arm 9a and the main housing 1 (not illustrated) or between the lever arm 9a and the cartridge 50 (see FIG. 2).

Referring back to the functionality of the dispensing mechanism 3, said operating stroke of the operating member 9 results in the distally directed helical movement of the coupling member 11 (i.e. to the right in FIG. 2) against an increasing counterforce of the first biasing member 13. Here, said first biasing member 13 acts between the coupling element 11 and a distal housing section 1b of the main body 1. In this connection, it is reminded of the fact that the coupling member 11 is engaged with the first outer thread 5a of the piston rod 5. The pitch of the ramps of the second clutch 11b matches the pitch of said first outer thread 5a of the piston rod 5. Thus, the coupling member 11 screws distally along the piston rod 5 without causing the piston rod 5 to move during this "dose setting process".

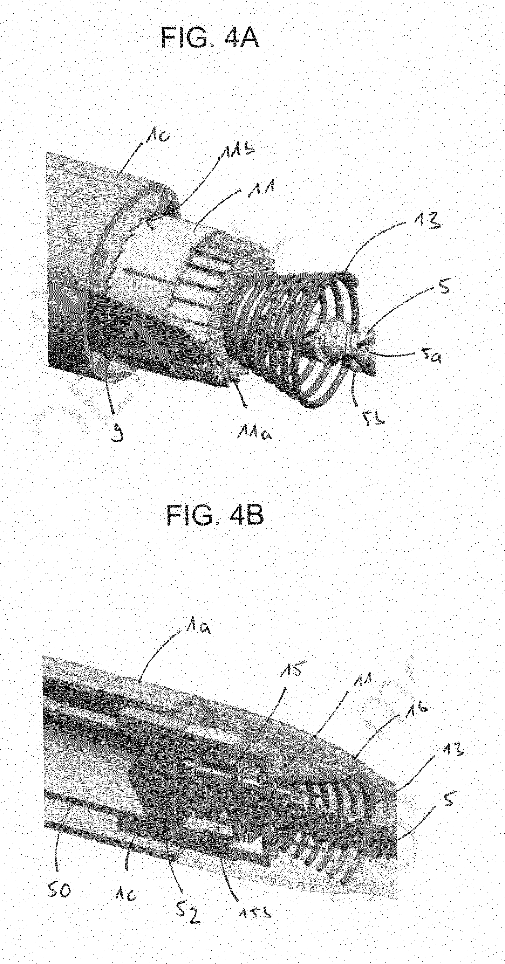

As indicated in FIGS. 4A and 4B, at the end of a full operating stroke, the operating member 9 pushes the coupling member 11 beyond the ramps of the second clutch 11b, such that the first biasing member 13 can push the coupling member 11 axially in the proximal direction (see the arrows). Due to the threaded engagement of the coupling member 11 with the first outer thread 5a of the piston rod 5, this axial movement of the coupling member 11 causes a proximal movement of the piston rod 5. Thus, a full operation stroke of the operating member 9 from a non-operating position to an operating position results in the above described helical charging movement of the coupling member followed directly by a proximal dispensing movement of the coupling member 11 and a thereby caused proximal dispensing movement of the piston rod 5. There is no need of operating a further activation button for causing the dispensing process.

After said full operation stroke, the user releases the operating member 9 such that the fourth biasing member 9c can bring the operating member 9 back into its non-operating position. During said resetting movement of the operating member 9, the second end of the lever arm 9a moves forward at least one tooth along the first clutch 11a.

If the operating member 9 is released before reaching the operating position and finishing the full operation stroke as described above, the first biasing member 13 pushes back the coupling member 11 helically in the proximal direction into its original position. At the same time, the operating member 9 is pushed into its non-operating position due to the forces from the fourth biasing member 9b and of the first biasing member 13.

Referring back to the dispensing process with the present dispensing device, the piston rod 5 is pushed by the coupling member 11 in the proximal direction to push the piston 5a along the cartridge 50 for dispensing the substances therefrom.

As can be seen for example in FIGS. 1, 3A and 3B, said piston rod 5 comprises a second outer thread 5b. Said second outer thread 5b runs in the opposite direction than the first outer thread 5a along the piston rod 5 and overlaps with the first outer thread 5a.

As can be seen for example in FIGS. 2, 3B and 4B, the second outer thread 5b is engaged with an inner thread 15b of a guiding member 15. Said guiding member 15 is coupled via a third clutch 15a to the main body 1, in particular to the inner coupling section 1c of the main body 1. Said third clutch 15a can be formed as, in particular proximally oriented, releasable tooth-clutch. It acts for example between the guiding member 15 and the internal connection section 1c of the main body (see for example FIG. 3B).

In the illustrated embodiment, the guiding member 15 is axially movable along the longitudinal direction of the main body 1 between a distal locking position (see FIGS. 3b and 4B) and a proximal releasing position (not illustrated). In the distal locking position, the third clutch 15a is locked. In the proximal releasing position, the third clutch 15b is released. The guiding member 15 is biased by a second biasing member 17 acting between the guiding member 15 and the internal connection section 1c of the main body 1, from its distal locking position to its proximal releasing position.

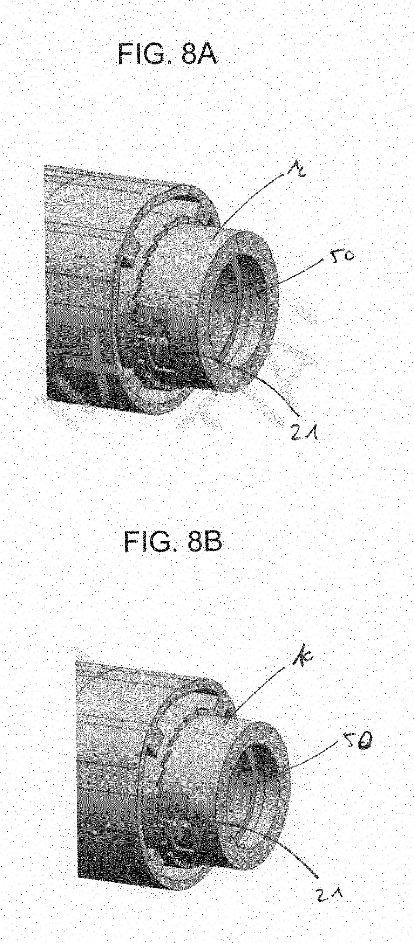

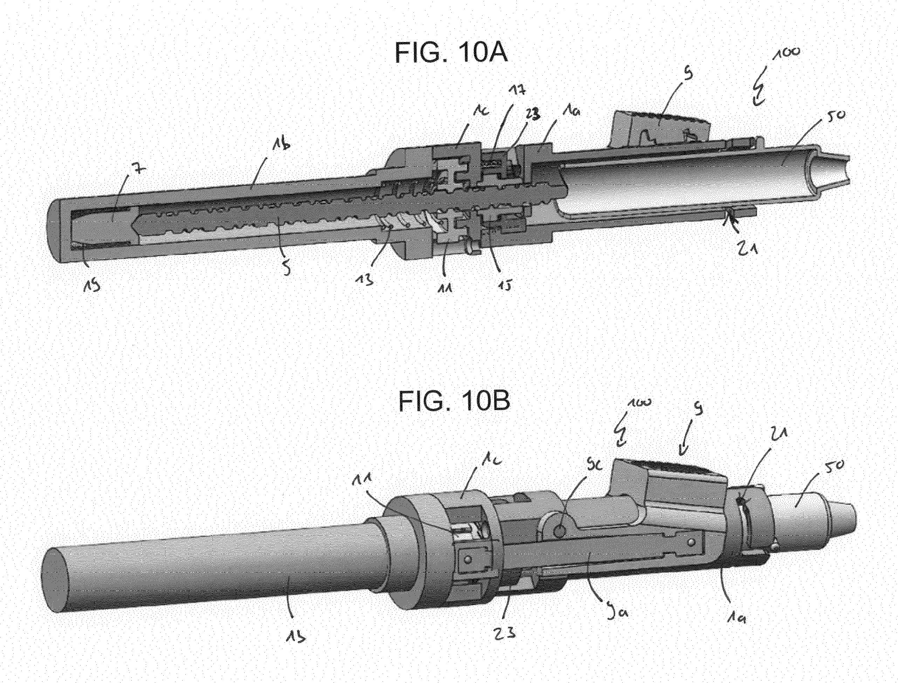

As indicated above, the main body 1 is configured to receive and hold a cartridge 50 containing the substances to be dispensed by the dispensing device 100. Said guiding member 15 is configured such that the cartridge 50 pushes the guiding member 15 into its distal locking position, when being received and/or held by the main body 1. For holding the cartridge 50 and, thus, the guiding member 15 against the forces from the second biasing member 17 in said distal position, the cartridge 50 can be fixed to the main body 1 by a bayonet coupling 21. Said bayonet coupling is illustrate din FIGS. 8A and 8B. The arrows in FIG. 8A illustrate the decoupling process of the bayonet coupling 21 and the arrows in FIG. 8B illustrate the coupling process of the bayonet coupling 21. Here, said bayonet coupling 21 acts between a distal end section of the cartridge 50 and the internal connection section 1c of the main body 1. However, said bayonet coupling 21 can act also between a proximal end section of the cartridge 50 and the proximal housing section 1a of the main body 1 (see for example the configuration of FIGS. 10A and 10B).

The above described configuration results in that the guiding element 15 is hold in the distal locking position in which the guiding element 15 is locked rotationally and translationally to the main body 1, when a cartridge 50 is received and hold by the dispensing device 100. Due to this rotational locking, the threaded engagement of the second outer thread 5b with said guiding element 15 results in a rotational screwing movement of the piston rod 5 through the guiding element 15 during its proximal dispensing movement.

The ratio between the charging movement of the coupling member 11 and the charging movement of the piston rod 5 is determined by the relation of the pitches of the first outer thread 5a and the second outer thread 5b. The selection of a specific relation between the pitches of said outer threads 5a and 5b allows a flexible adaption of the operation characteristics of the final dispensing device 100. Via said relation in particular the amount of dispensed substances per dose can be adjusted.

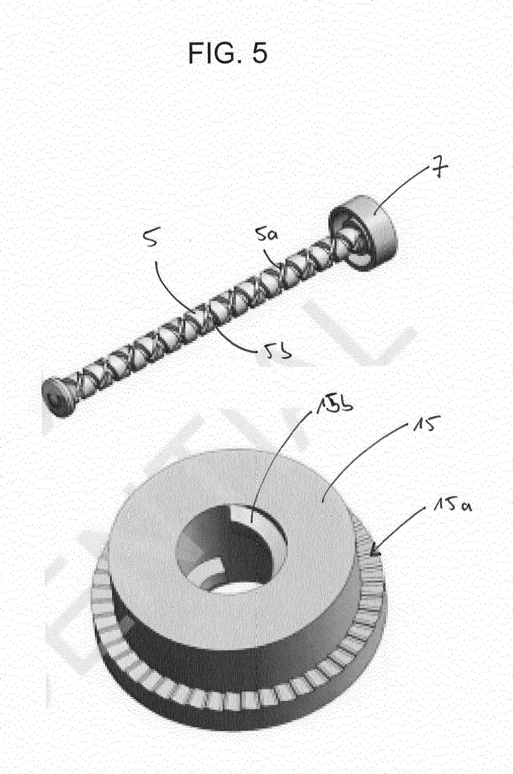

The pitch of the second outer thread 5b can be smaller than the pitch of the first outer thread 5a. Such a configuration is illustrated in FIG. 5 and of particular relevance for dispensing devices 100 for dispensing dental adhesive substances. In such a configuration, the pitch of the first outer thread 5a can lie for example within the range of 1mm to 40mm, preferably within the range of 1.5mm to 20mm. The pitch of the second outer thread 5b can lie for example within the range of 0.5mm to 39.5mm, preferably within the range of 1mm to 19.5mm.

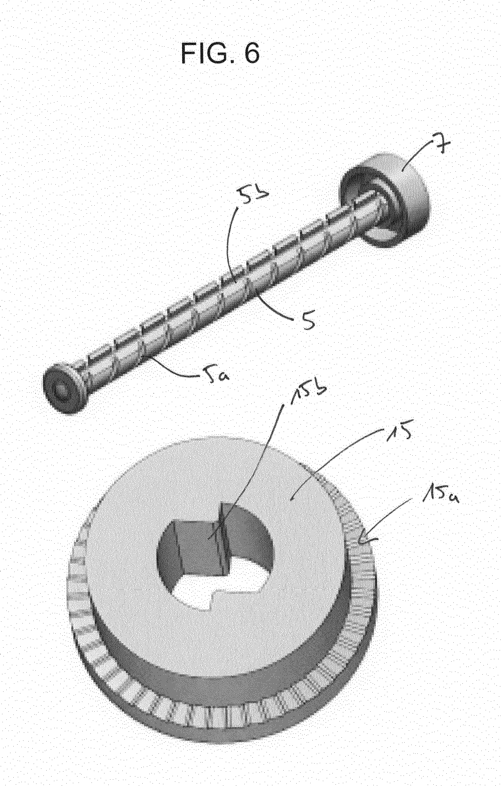

Alternatively, the pitch of the second outer thread 5b can be greater than the pitch of the first outer thread 5a. In such a configuration, the pitch of the first outer thread 5a can lie for example within the range of 1mm to 40mm, preferably within the range of 1.5mm to 20mm. The pitch of the second outer thread 5b can lie for example within the range of 1mm to infinite mm. A pitch of "infinite mm" means that the second outer thread 5b is provided in the form of an axially extending splines. Such a configuration is illustrated in FIG. 6 and is of particular relevance for dispensing devices 100 for dispensing dental esthetic substances. One has to note that with an axially directed spline configuration for the second pitch 5b, the piston rod 5 moves purely axially with the coupling member 11 during the dispensing process (i.e. there is no rotation of the piston rod 5 during its dispensing movement).

Finally, the pitch of the second outer thread 5b can be equal to the pitch of the first outer thread 5a (not illustrated). In such a configuration, the pitch of the first outer thread 5a can lie for example within the range of 1mm to 40mm, preferably within the range of 1.5mm to 20mm. The pitch of the second outer thread 5b can lie for example within the range of 1mm to 40mm, preferably within the range of 1.5mm to 20mm.

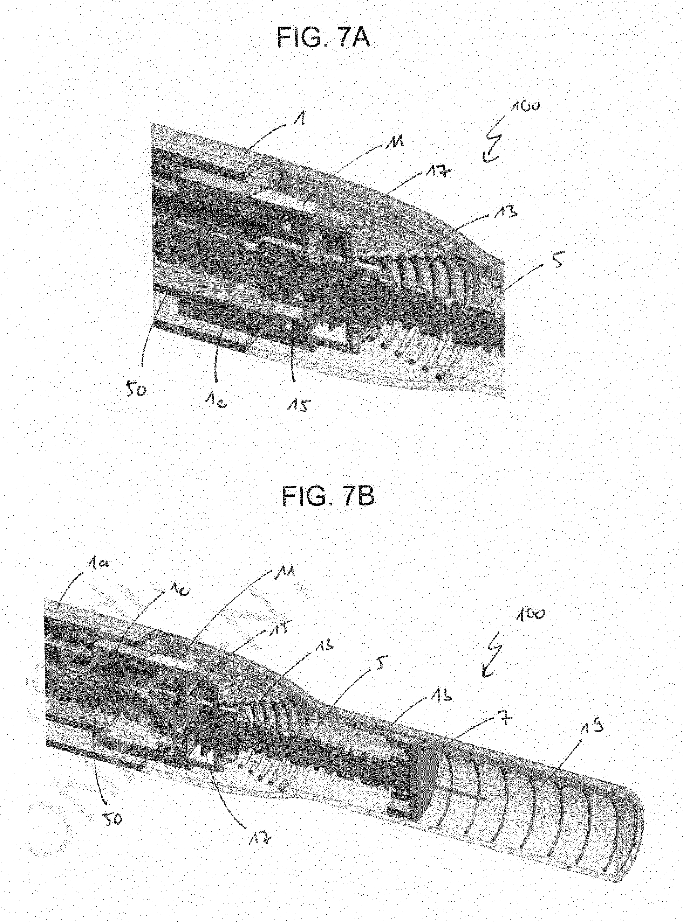

In the following referring to FIGS. 7A to 7D and FIG. 8A and 8B, a reloading and resetting process with the above described dispensing device 100 will be described.

At the beginning, the cartridge 50 is fully inserted into the main body 1 of the dispensing device 100 such that the third clutch 15a is closed to lock the guiding member 15 movably (rotationally and effectively also translationally) to the main body 1 (see for example FIG. 1). In this state, the cartridge 50 is coupled fixedly to the main body 1 via the bayonet coupling 21. To decouple the cartridge 50 from the dispensing device 100, the cartridge 50 is rotated and subsequently pulled out of the main body 1 as illustrated by the arrows in FIG. 8A. The second biasing member 17 forces the guiding member 15 to follow the proximal movement of the cartridge 50 for a predetermined amount until reaching an abutment section of the main body 1 (see the arrows in FIG. 7A). By that proximal movement of the guiding member 15, the third clutch 15a is released to rotationally decouple the guiding member 15 from the main body 1.

The piston rod 5 is coupled via an intermediate member 7 to a third biasing member 19 biasing the piston rod 5 in the proximal direction. As illustrated in FIG. 7B, said third biasing member 19 is configured to cause a proximal priming movement of the piston rod 5 when the third clutch 15a is released and the cartridge 50 is removed from the dispensing device 100 (see the right arrow in FIG. 7B). During this priming movement, the piston rod 5 rotates together with the guiding member 15 due to the threaded engagement of the first outer thread 5a of the piston rod 5 with the fixed coupling member 11 (see the left arrow in FIG. 7B).

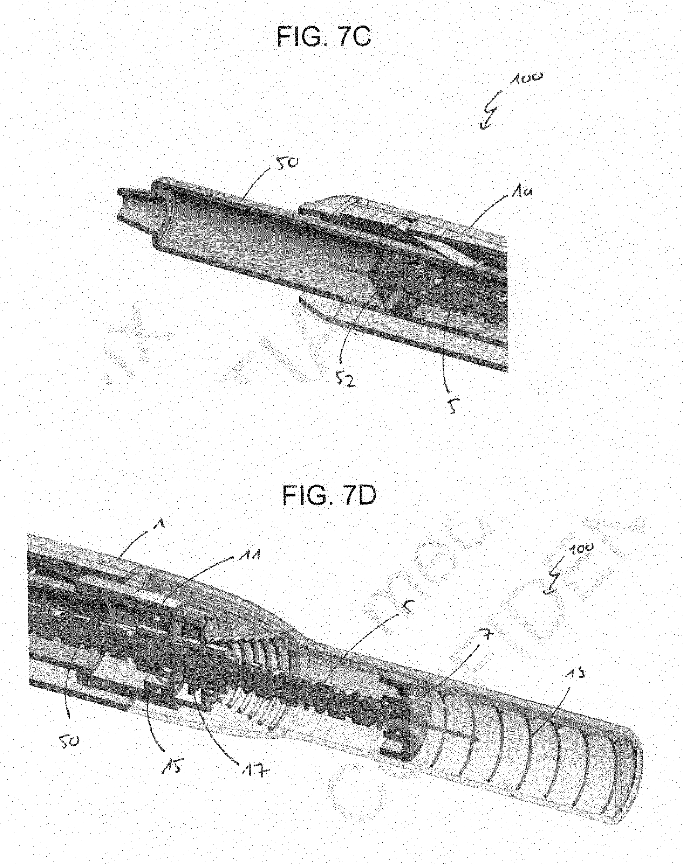

By inserting a new cartridge 50 into the dispensing device 100, a piston 52 thereof contacts the piston rod 5 and pushes the piston rod 5 against the counterforce of the third biasing member 19 (see FIG. 7C) resulting in a reversed rotation of the piston rod 5 together with the guiding element 15 (see FIG. 7D).

It is pointed to the fact that this resetting rotation of the piston rod 5 has the same direction as the dispensing rotation of the piston rod 5. This results from the above described specific coupling configuration of the various components of the dispensing mechanism 3. Furthermore, it is highlighted that the third biasing member 19 is preferably configured not to generate a load high enough to cause a dispensing of the substances from the cartridge 50, when being received and/or held by the main body 1. In such a configuration, it would be not necessary to provide a separate valve for preventing an uncontrolled dispensing of the substances.

As soon as the rear end of the cartridge 50 contacts the guiding member 15, it pushes said guiding member 15 in the distal direction (i.e. in the other direction than indicated by the arrows in FIG. 7A). This distal movement results in a locking of the third clutch 15a and thus in a rotational fixation of the guiding member 15 (see for example situation of Fig. 3B). To lock the cartridge 50 via the bayonet coupling 21 to the main body of the dispensing device 100, said translational insertion of the cartridge 50 is followed by a rotational movement of the cartridge 50 as indicated by the arrows in FIG. 8B. This translational locking of the cartridge 50 results in a translational locking of the guiding member 15, such that the above described dispensing process can be carried out with the reloaded and reset dispensing device 100.

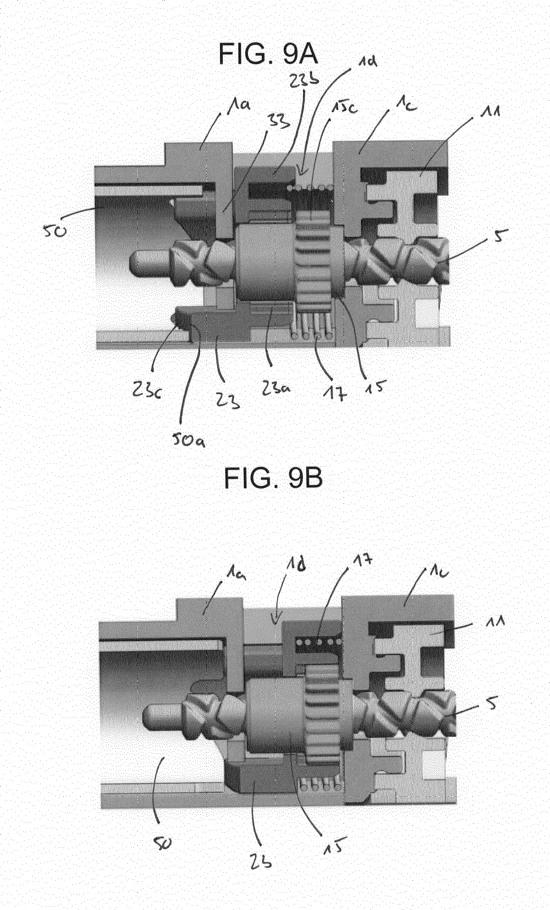

In the following, it is referred to FIGS. 9A and 9B illustrating an alternative configuration for the third clutch 15a. Here, a separate clutch element 23 provided in an axially movable but rotationally fixed manner along the longitudinal axis of the main body 1 between a distal locking position (see FIG. 9A) and a proximal releasing position (see FIG. 9A). In the distal locking position, the axially extending splines 23a of the clutch element 23 engage axially extending splines 15c of the guiding member 15, such that the third clutch 15a is locked (see FIG. 9A). In the proximal releasing position, the axially extending splines 23a of the clutch element 23 are disengaged from the axially extending splines 15c of the guiding member 15, such that the third clutch 15a is released (see FIG. 9B). The guiding element 15 is always secured against a transversal movement by abutment sections 33 of the proximal housing section 1a and of the inner connection section 1c.

In this configuration, the second biasing member 17 acts on the clutch element 23 and a rear end section of the cartridge 50 is provided with a ramp feature 50a, such that the distal locking movement of the clutch element 23 is at least partly caused by the rotational component of the locking movement of the bayonet coupling 21 between the cartridge 50 and the main body 1.

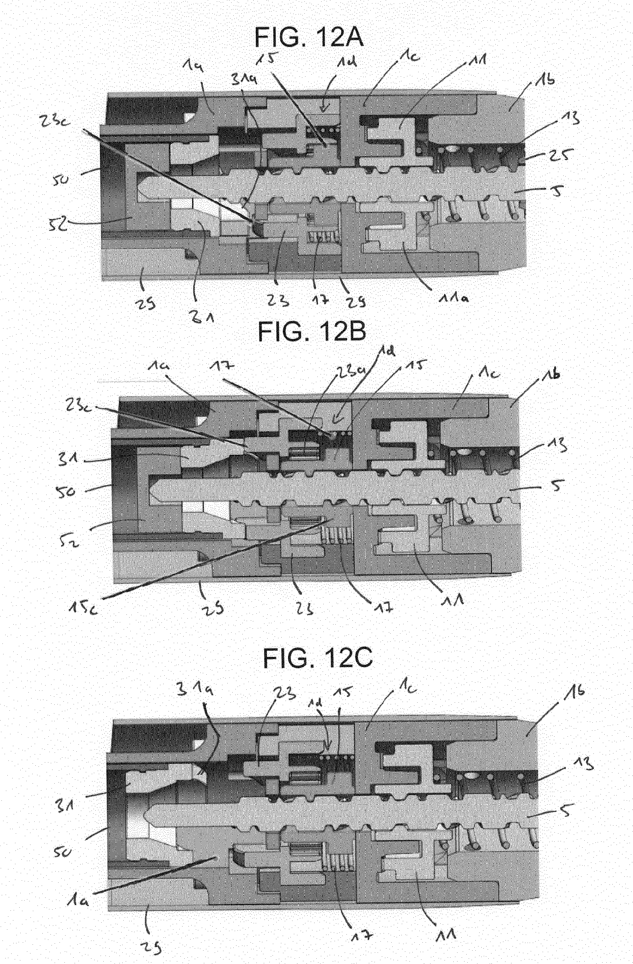

The functionality of this clutch configuration corresponds in principle to the above described clutch configuration and, thus, is not described in further detail. However, it is pointed to the fact that in both configurations for the third clutch 15c, at least one further transmitting member 31 with corresponding ramp features 31a can be provided to act between the cartridge 50 and the respective component of the third clutch 15a (see for example below described FIGS. 12A to 12C).

For both clutch configurations, the second biasing member 17 can be supported against the coupling member 11 (see for example FIGS. 7A) or against the main body 1 (see for example FIG. 9A).

FIGS. 10A and 10B show an alternative embodiment for a dispensing device 100 in accordance with the present invention.

The main difference between this configuration and the above described configurations is that here, the operating member 9 is formed not of a single component but from various elements connected to each other. In particular, a first element forms an operation button to be operated by a user. Said first element is coupled rotationally to a proximal section 1a of the main body 1. A second element in the form of a lever 9a is fixed at its first end to said first element and at its second end to a third element. Thus, said second element serves as transfer member for transferring a movement of the first element to the third element. Said third element is coupled to the coupling member 11 via the first clutch 11a, similar as described above.

Furthermore, it is pointed to the fact that in this configuration, the main body 1 is divided into three separate components coupled releasably to each other to serve as proximal housing section 1a, distal housing section 1b and internal connection section 1c. In contrast to this configuration, various sections 1a to 1c of the main body 1 of the above described dispensing device 100 of the foregoing figures are connected non-releasably to each other.

Finally, the specific shapes of the various components, in particular of the three housing sections 1a to 1c differ between the configuration of FIGS. 10A and 10B and the configuration of FIGS. 1 to 7D. But these differences cause no substantial differences in functionality between said configurations.

The first biasing member 13 can be for example a conical (see for example FIG. 1), a cylindrical coil spring (see for example FIG. 10A) or a plate spring (not illustrated). The second biasing member 17 can be for example a cylindrical coil spring (see for example FIG. 9A) or a plate spring (see for example FIG. 7A). The third biasing member 19 can be for example a cylindrical coil spring (see FIG. 1).

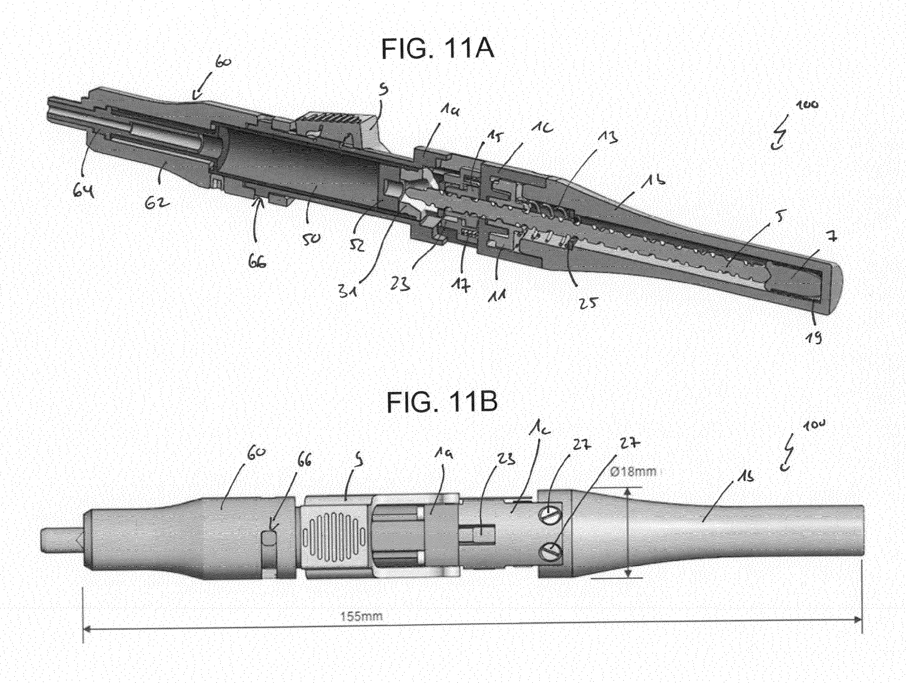

FIGS. 11A and 11B show a further alternative embodiment for the dispensing device 100. In this configuration, a dispensing tip 60 with a tip housing 62 and an internal guiding structure 64 is coupled via a further bayonet coupling 66 to the proximal end of the proximal housing section 1a of the main body 1.

Such a dispensing tip 60 can be used to adapt the dispensing characteristics of the dispensing device 100 by for example reducing the cross section of an outlet opening through which the substances are dispensed.

As can be seen for example in FIG. 11A, a washer 25 can be provided between the distal end of the first biasing member 13 and the distal housing section 1b. Said washer 25 serves as abutment for the intermediate member 7.

In FIG. 11B exemplary dimensions for a dispensing device 100 in accordance with the present invention are given. Furthermore, this figure shows a releasable connection between the distal housing section 1b and the internal connection section 1c via screws 27.

FIGS. 12A to 12C show the third clutch 15a of this dispensing device 100 during a removing process of the cartridge 50 similar to FIGS. 7A to 7D but with a clutch configuration similar to the configuration of FIGS. 9A and 9B. Here, it can be seen that a further transmitting member 31 can act between the rear end of the cartridge 50 and the clutch element 23 or the guiding member 15. In such a configuration, said transmitting member 31 can be provided with ramp features 31a for causing the above described distal movement of the clutch element 23 (or of the guiding member 15) via a purely rotational movement of the cartridge 50 relative to the main body 1.

In the following, the various steps of the removing process illustrated in FIGS. 12A to 12C will be described shortly.

Starting with FIG. 12A, clutch element 23 is hold by the transmitting member 31 against the forces of the second biasing member 17 in its distal position, in which it is splined with the guiding element 15. Rotation the cartridge 50 to release the bayonet coupling 21, causes an identical rotation of the intermediate member 31 allowing the clutch element 23 to be forced by the second biasing member 17 to slide along the ramp features 31a into the proximal direction until the splines 23a of the clutch member 23 are disengaged from the splines 15c of the guiding member 15. As illustrated in FIG. 12C, the proximal movement of the clutch element 23 is limited by the proximal housing portion 1a, such that the cartridge 50 and the transmitting member 31 can be removed without losing the clutch member 23 and the second biasing member 17.

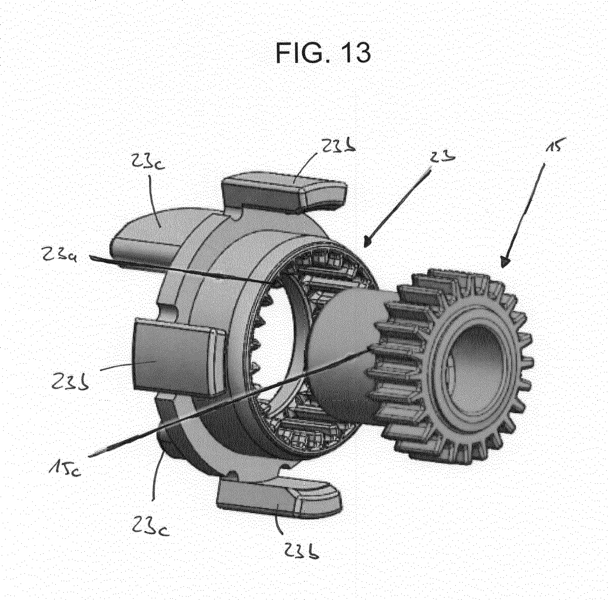

For further details of the specific implementation of the clutch element 23 in this embodiment, it is referred to FIG. 13. As can be seen there, the clutch element 23 comprises inner splines 23a for engaging outer splines 15c of the guiding member 15, outer guiding features 23b guided along axially extending inner guiding recesses 1d along the main body 1, and ramping protrusions 23c configured to contact the ramp features 50a of the cartridge 50 or the ramp features 31a of the transmitting member 31, respectively.

Finally, it is pointed to the fact that in particular the configurations illustrated in FIGS. 10A, 10B, 11A and 11B can be encapsulated by a further outer housing 29 as indicated for example in FIGS. 12A to 12C.

The invention is further described with reference to the following embodiments.

### Reference numeral list

- 1: main body
- 1a: proximal housing section
- 1b: distal housing section
- 1c: internal connection section
- 1d: guiding recess
- 3: dispensing mechanism
- 5: piston rod
- 5a: first outer thread
- 5b: second outer thread
- 7: intermediate member
- 9: operating member
- 9a: lever arm
- 9b: fourth biasing member
- 9c: rotary pin
- 11: coupling member
- 11a: first clutch
- 11b: second clutch
- 13: first biasing member
- 15: guiding member
- 15a: third clutch
- 15b: inner thread
- 15c: splines
- 17: second biasing member
- 19: third biasing member
- 21: bayonet coupling
- 23: clutch element
- 23a: splines
- 23b: guiding feature
- 23c: ramping protrusion
- 25: washer
- 27: screw
- 29: outer housing
- 31: transmitting member
- 31a: ramp feature
- 33: abutment section
- 50: cartridge
- 50a: ramp feature
- 52: piston
- 60: dispensing tip
- 62: tip housing
- 64: guiding structure
- 66: further bayonet coupling
- 100: dispensing device

## Claims

1. Dispensing device (100) for dispensing in particular dental substances, the dispensing device (100) comprising:
a main body (1);
a dispensing mechanism (3) configured to dispense the substance(s) from the dispensing device (100); and
an operating member (9) configured to be moved manually by a user from a non-operating position to an operating position for activating the dispensing mechanism (3);
wherein the dispensing mechanism (3) comprises a piston rod (5) configured to act in a proximal direction on the substance(s) for dispensing the substance(s) from the dispensing device (100), a coupling member (11) configured to couple the operating member (9) operatively with the piston rod (5) and a first biasing member (13) biasing the coupling member (11) in the proximal direction,
wherein the coupling member (11) is configured such that an operation stroke of the operating member (9) from its non-operating position to its operating position results directly in a distally directed helical charging movement of the coupling member (11) relative to the main body (1) against the forces of the first biasing member (13), followed by a proximal, in particular non-rotational, dispensing movement of the coupling member (11) and a thereby caused proximal dispensing movement of the piston rod (5).

2. Dispensing device (100) of claim 1, wherein
the coupling member (11) is coupled via a first clutch (11a) to the operating member (9), via a second clutch (11b) to the main body (1) and engaged threadedly with a first outer thread (5a) of the piston rod (5).

3. Dispensing device (100) of claim 2, wherein
the piston rod (5) comprises a second outer thread (5b) running in the opposite direction than the first outer thread (5a) along the piston rod (5),
wherein in particular the second thread (5b) overlaps at least partly, in particular fully, with the first outer thread (5a).

4. Dispensing device (100) of claim 3, wherein
the second outer thread (5b) is engaged with a guiding member (15) coupled in a rotationally releasable manner to the main body (1).

5. Dispensing device (100) of claim 3 or 4, wherein
the pitch of the second outer thread (5b) is equal to the pitch of the first outer thread (5a),
wherein in particular, the pitch of the first outer thread (5a) lies within the range of 1mm to 40mm, preferably within the range of 1.5mm to 20mm, and/or the pitch of the second outer thread (5b) lies within the range of 1mm to 40mm, preferably within the range of 1.5mm to 20mm.

6. Dispensing device (100) of claim 3 or 4, wherein
the pitch of the second outer thread (5b) is smaller than the pitch of the first outer thread (5a),
wherein in particular, the pitch of the first outer thread (5a) lies within the range of 1mm to 40mm, preferably within the range of 1.5mm to 20mm, and/or the pitch of the second outer thread (5b) lies within the range of 0.5mm to 39.5mm, preferably within the range of 1mm to 19.5mm.

7. Dispensing device (100) of 3 or 4, wherein
the pitch of the second outer thread (5b) is greater than the pitch of the first outer thread (5a),
wherein in particular, the pitch of the first outer thread (5a) lies within the range of 1mm to 40mm, preferably within the range of 1.5mm to 20mm and/or the pitch of the second outer thread (5b) lies within the range of 1mm to infinite mm.

8. Dispensing device (100) according to any one of claims 1 to 7, wherein the guiding member (15) is coupled via a third clutch (15a) to the main body (1),
wherein the guiding member (15) or a separate clutch element (23) is interacting with the guiding member (15) to form the third clutch (15a).

9. Dispensing device (100) according to claim 8 with the separate clutch element (23), wherein
said clutch element (23) comprises inner splines (23a) configured to be engaged with outer splines (15c) of the guiding member (15), outer guiding features (23b) configured to engage axially extending inner guiding recesses (1d) along the main body (1), and/or ramping protrusion (23c) configured to contact a ramp feature (50a) of the cartridge (50) or ramp features (31a) of a further transmitting member (31) acting between the cartridge (50) and the clutch element (23).

10. Dispensing device (100) according to claim 8 or 9, wherein
the guiding member (15) or the separate clutch element (23) is axially movable along the longitudinal direction of the main body (1) between an in particular distal locking position, in which the third clutch (15a) is locked, and an in particular proximal releasing position, in which the third clutch (15a) is released.

11. Dispensing device (100) according to claim 10, wherein
the guiding member (15) or the separate clutch element (23), respectively, is biased by a second biasing member (17) from its locking position to its releasing position.

12. Dispensing device (100) according to claim 11,
wherein the main body (1) is configured to receive and hold a cartridge (50) containing the substance(s) to be dispensed by the dispensing device (100),
wherein the guiding member (15) or the separate clutch element (23), respectively, is configured such that the cartridge (50) pushes the guiding member (15) or the separate clutch element (23), respectively, directly or via at least one further transmitting member (31) into its locking position, when being received and/or held by the main body (1).

13. Dispensing device (100) of claim 12, wherein
the second biasing member (17) is compressed between the guiding member (15) or the separate clutch element (23), respectively, and the coupling member (11), or
between the guiding member (15) or the separate clutch element (23), respectively, and the main body (1).

14. Dispensing device (100) of claim 10 or 11, wherein
the piston rod (5) is coupled, in particular via an intermediate member (7), to a third biasing member (19) biasing the piston rod (5) in the proximal direction,
wherein the third biasing member (19) is configured to cause a proximal priming movement of the piston rod (5) when the third clutch (15a) is released.

15. Dispensing device (100) of claim 12, wherein
the third biasing member (19) is configured not to generate a load high enough to cause a dispensing of the substances(s) from the cartridge (50), when being received and/or held by the main body (1).

16. The dispensing device (100) of any one of the preceding claims,
wherein
the operating member (9) comprises a lever arm (9a) coupled pivotably against the forces of a fourth biasing member (9b) to the main body (1), wherein the fourth biasing member (9b) is in particular configured to act between the lever arm (9a) and the main housing (1) or between the lever arm (9a) and a/the cartridge (50) received and/or held by the main body (1).

17. The dispensing device (100) of any one of the preceding claims,
wherein
the first clutch (11a) is an in particular radially oriented one-way snap-fit-ratchet clutch, the second clutch (11b) is an in particular distally oriented one-way double-ratchet clutch and/or the third clutch (15a) is an in particular proximally oriented releasable tooth-clutch.

18. The dispensing device (100) of any one of the preceding claims,
wherein
the first biasing member (13) is an in particular conical or cylindrical coil spring or a plate spring, the second biasing member (17) is an in particular cylindrical coil spring or a plate spring, the third biasing member (19) is an in particular cylindrical coil spring and/or the fourth biasing member (9b) is an in particular single-layered plate spring, in particular fixed to the lever arm (9a) or formed as intrinsic component of the lever arm (9a).

19. The dispensing device (100) of any one of the preceding claims,
wherein
the main body (1) comprises a proximal housing section (1a), a distal housing section (1b) and an internal connection section (1c), wherein the proximal housing section (1a), the distal housing section (1b) and/or the internal connection section (1c) are coupled to each other releasably, fixed to each of non-releasably or formed integrally.

20. The dispensing device (100) of claim 19, wherein
the second clutch (11b) acts between the coupling member (11) and the internal connection section (1c) and/or
the third clutch (15a) acts between the guiding member (15) and the internal connection section (1c).

21. The dispensing device (100) of any one of the preceding claims,
wherein
the dispensing device (100) further comprises an outer housing (29) enclosing at least partly the proximal housing section (1a), the distal housing section (1b) and/or the inner connection section (1c).

22. The dispensing device (100) of any one of the preceding claims,
wherein
the main body (1) is configured such that a/the cartridge (50) containing the substance(s) to be dispensed with the dispensing device (100) can be fixed thereto by a bayonet coupling (21),
wherein said bayonet coupling (21) acts in particular between a distal end section of the cartridge (50) and the internal connection section (1c) of the main body (1) or a proximal end section of the cartridge (50) and the proximal housing section (1a).

23. The dispensing device (100) of any one of the preceding claims,
wherein
the main body (1) is configured such that a dispensing tip (60), in particular comprising a tip housing (62) and an internal guiding structure (64), can be coupled, in particular via a further bayonet coupling (66), thereto.
